# FASCICULE DE BREVET EUROPEEN

(11) **EP 2 861 422 B1**
(45) Date de publication et mention de la délivrance du brevet: **06.03.2019**
(21) Numéro de dépôt: 13731058.7
(22) Date de dépôt: 12.06.2013
(51) Int. Cl.: B32B 17/10, C03C 27/12, B60Q 3/208, B60Q 3/76, F21V 14/00

(54) **TOIT VITRÉ COMPORTANT DES MOYENS D'ÉCLAIRAGE ET DE CONTRÔLE DE LA TRANSMISSION LUMINEUSE**
GLASDACH MIT LEUCHTMITTELN UND SOLCHEN ZUR KONTROLLE DER LICHTTRANSMISSION
VITROUS ROOF COMPRISING MEANS FOR LIGHTING AND FOR THE CONTROL OF THE LUMINOUS TRANSMISSION

(30) Priorité: 19.06.2012 BE 201200411
(43) Date de publication de la demande: 22.04.2015
(73) Titulaire: AGC Glass Europe, 1348 Louvain-La-Neuve (BE)
(72) Inventeur: MASAKI, Yuji, B-1950 Kraainem (BE); LINTHOUT, Sébastien, B-1390 Archennes (BE)
(74) Mandataire: Chabou, Samia
(86) Numéro de dépôt international: PCT/EP2013/062112
(87) Numéro de publication internationale: WO 2013/189796

(56) Documents cités:
- EP-A1- 1 437 215
- DE-A1- 10 204 359
- US-A1- 2009 046 355
- US-A1- 2010 221 461

## Description

L'invention concerne les toits de véhicules constitués pour partie au moins d'un vitrage. De manière plus précise l'invention concerne les toits dont le vitrage recouvre une part importante de leur surface, voire la totalité de celle-ci.

Les toits vitrés se substituent pour une part croissante aux toits traditionnels qui sont partie de la carrosserie des véhicules. Le choix de ces toits est le fait des constructeurs d'offrir à leurs clients cette option donnant l'impression de l'ouverture du véhicule vers l'extérieur, à la manière d'un cabriolet, sans avoir les inconvénients de ces derniers, les toits maintenant le confort d'une berline traditionnelle. Pour cela les toits vitrés doivent satisfaire à de nombreuses exigences. Il convient tout d'abord de répondre aux obligations de sécurité. Les toits vitrés doivent satisfaire aux règlements qui imposent une résistance à l'éviction en cas d'accident. Dans ce sens ils doivent satisfaire aux règles désignées «R43». La résistance à l'éviction des passagers nécessite notamment le recours à des vitrages feuilletés.

La présence de vitrages feuilletés n'exclut pas la nécessité de limiter le poids. Pour cette raison les toits feuilletés utilisés doivent aussi présenter des épaisseurs bien maîtrisées. En pratique les vitrages de ces toits ont une épaisseur qui n'est pas supérieure à 8mm et de préférence pas supérieure à 7,5mm..

Le choix de toits vitrés, comme précisé ci-dessus, a pour but le gain de luminosité dans l'habitacle. Ce gain ne doit pas être contraire à d'autres propriétés qui assurent le confort des passagers, en particulier le confort thermique. La présence de toits vitrés, motivée par l'augmentation de la luminosité, conduit aussi à l'accroissement des transferts thermiques avec l'extérieur. Ceci est sensible dans le mécanisme d'effet de serre lorsque le véhicule est exposé à un rayonnement solaire intense. Mais le toit doit aussi contribuer au maintien de la température de l'habitacle en période froide.

Le contrôle des conditions thermiques conduit à diverses mesures dont l'utilisation de vitrages à forte sélectivité. Ces conditions résultent du choix des verres utilisés (le plus souvent minéraux, mais qui peuvent aussi être organiques). Elles sont aussi le fait des filtres additionnels que comportent ces vitrages, notamment ceux constitués par des systèmes de couches réfléchissant sélectivement les infrarouges. L'art antérieur fait état de solutions répondant à ces exigences. C'est le cas en particulier du brevet EP1200256.

Le choix de toits vitrés a permis aussi de développer des fonctionnalités supplémentaires, par exemple l'intégration de systèmes photovoltaïques qui contribuent à la production électrique nécessaire au fonctionnement des divers organes des véhicules. La mise en oeuvre de tels systèmes fait l'objet de nombreuses publications, et notamment du brevet EP1171294.

Par ailleurs le souhait d'un accroissement de luminosité dans l'habitacle n'est pas nécessairement permanent. L'utilisateur peut, selon le moment d'utilisation, préférer une luminosité moindre, ou simplement maintenir le caractère «privatif» qui isole l'habitacle des regards extérieurs.

Pour modifier la transmission lumineuse des vitrages en fonction des conditions d'utilisation, des solutions sont proposées antérieurement. Il s'agit notamment des vitrages dits «électro-commandés», tels que les vitrages comportant des moyens électro-chromes dans lesquels la variation est obtenue par modification de l'état d'ions colorés dans des compositions incluses dans ces vitrages. Il s'agit aussi de vitrages comprenant des couches de particules en suspension, qui selon l'application d'une tension électrique sont ordonnées ou non tels que les systèmes dits SPD (pour «suspended particles devices»).

Le développement des toits vitrés soulève d'autres questions et ouvre la voie à de nouvelles réalisations. Certaines fonctions peuvent, ou doivent être modifiées compte tenu des spécificités de ces toits.

Parmi ces fonctions figure l'éclairage de l'habitacle, qu'il s'agisse de l'éclairage d'ambiance ou de celui plus localisé correspondant à ce qui est qualifié de «liseuses». De façon traditionnelle les moyens utilisés pour ces éclairages sont disposés sur le toit ou sur le revêtement intérieur de celui-ci. Fréquemment également les moyens d'éclairage font partie d'un ensemble qui s'étend en partie sur le pare-brise et qui comporte l'embase du rétroviseur intérieur, différents capteurs commandant le déclenchement des essuie-glace, celui des projecteurs extérieurs, ensemble qui est aussi le support de moyens de communication de données par voie d'ondes de fréquences variées (télépéages, GPS...), ou celui d'aide à la conduite comme les caméras infrarouge. Les ensembles en question font obstacle localement à la transparence souhaitée qui motive le choix de ces solutions «vitrées».

L'invention se propose d'utiliser au mieux les vitrages constituant les toits en y intégrant les moyens d'éclairage de l'habitacle de telle sorte que ceux-ci n'altèrent pas significativement leur transparence. Cette intégration, comme décrit ultérieurement, permet de bénéficier de nouvelles dispositions adaptées à ces toits vitrés.

Le mode choisi selon l'invention est l'utilisation de diodes électroluminescentes (LED). Ce choix a été proposé antérieurement par exemple dans les demandes WO2004/062908, EP1437215, EP1979160. Selon ces demandes les diodes sont incluses dans l'intercalaire plastique du vitrage feuilleté qui associe les deux feuilles de verre. Selon la demande considérée, les LED sont alimentées soit par des fils conducteurs fins (EP1979160) soit par des couches conductrices transparentes (EP1437215).

Au-delà du principe de l'utilisation de LED pour l'éclairage, l'art antérieur laisse entières des questions concernant les conditions qui font que ces produits répondent aux demandes des constructeurs, et sont effectivement réalisables dans les techniques d'intégration aux structures feuilletées considérées. Les inventeurs proposent en conséquence des solutions à ces questions.

Une exigence liée au mode d'utilisation concerné, est de disposer d'une puissance suffisante, notamment pour la constitution d'éclairage de type liseuse.

Des utilisations pour l'affichage d'informations sous forme lumineuse ont été envisagées antérieurement. L'affichage d'informations ne nécessite qu'une puissance relativement faible, même lorsque l'affichage est situé sur un vitrage exposé à la lumière extérieure au véhicule, autrement dit à contre-jour. Les LED concentrent leur émission sur une surface très réduite de telle sorte que le contraste avec une lumière extérieure reste suffisant même pour une puissance limitée. Il n'en est pas de même pour l'application «éclairage». D'une certaine manière une puissance ponctuelle peut même constituer un inconvénient. Lorsque le regard se porte directement sur ces sources ponctuelles très intenses, il existe un risque d'éblouissement d'autant plus grand que la puissance délivrée est plus importante.

La transmission lumineuse des toits vitrés est systématiquement limitée, d'une part pour garder un caractère qualifié de «privatif», et d'autre part pour limiter l'apport énergétique qui est indissociable des longueurs d'onde du domaine visible. Pour ces deux raisons au moins la transmission lumineuse des toits vitrés est normalement inférieure à 50% et souvent bien inférieure par exemple de l'ordre de 15 à 20% ou moins de la lumière incidente. La transmission en question peut être réglée de diverses manières comme indiqué dans la suite, notamment par l'utilisation de feuilles qui absorbent une part de la lumière incidente, mais aussi par des moyens qui permettent de commander des variations de transmission.

Dans la détermination de la puissance lumineuse pour un éclairage donné, il faut nécessairement tenir compte des éléments qui réduisent la lumière émise par les diodes, et notamment le fait qu'une part plus ou moins importante selon les vitrages considérés, est absorbée au passage des feuilles de verre, des intercalaires et de tout élément disposé sur le chemin suivi par le flux lumineux émis.

La puissance lumineuse nécessaire à l'éclairage selon l'invention, est avantageusement répartie sur une pluralité de diodes. La multiplicité des diodes présente plusieurs avantages. Un premier avantage est, par exemple, de ne nécessiter l'utilisation que de diodes de puissance individuelle moindre. Même si la puissance des diodes disponibles dans le commerce s'est considérablement accrue, celles de puissance modérée restent avantageuses, ne serait-ce que par ce qu'elles restent moins coûteuses. Elles sont aussi avantageuses dans la mesure où l'efficacité lumineuse des diodes les plus puissantes n'est pas la meilleure. Il est donc préférable de choisir des diodes qui restent dans des domaines de puissance correspondant à la meilleure efficacité. Cette façon de faire répond aussi à la nécessité, dont il est question ci-après, de limiter les conséquences négatives qui s'attachent aux conditions thermiques de mise en oeuvre des diodes.

Le rendement énergétique des diodes s'est aussi amélioré de façon significative au fil du temps. Pour une puissance donnée, la chaleur dégagée tend à diminuer dans les produits récents. Il reste que les meilleurs rendements énergétiques - c'est-à-dire la part de puissance électrique convertie en lumière - ne dépassent pas généralement 30%, et le plus couramment restent de l'ordre de 15 à 20%. Le dégagement de chaleur par effet joule est donc important.

La position des diodes dans le feuilleté ne facilite pas l'évacuation de la chaleur de fonctionnement. Pour une puissance élevée le fonctionnement d'une diode peut conduire à un échauffement local tel qu'il entraîne à terme une altération de la diode elle-même, des soudures au circuit d'alimentation, ou des éléments présents dans le toit feuilleté au contact ou à proximité immédiate de la diode. Si des feuilles de verre peuvent sans dommage supporter une élévation de température, d'autres constituants, y compris les feuilles thermoplastiques qui assemblent le feuilleté, nécessitent de maintenir la température dans des limites relativement strictes, le plus souvent inférieures à 100°C et même souvent inférieures à 80°C. Pour cette raison il est préférable selon l'invention de répartir la puissance totale nécessaire sur plusieurs diodes, chacune n'offrant qu'une fraction de cette puissance totale, ces diodes restant distantes les unes des autres.

L'expérience permet de déterminer l'évolution de la température d'une diode de puissance donnée dans un environnement tel que celui correspondant à un toit vitré feuilleté. Cette détermination tient compte de ce que la dissipation de la chaleur pour une diode s'effectue essentiellement par conduction par les matériaux au contact desquels la diode se trouve. Les matériaux intercalaires thermoplastiques du type PVB ne sont pas bons conducteurs, les feuilles de verre minéral ou organique ne le sont pas non plus. Il faut donc prendre soin de contenir la puissance des diodes utilisées. L'expérience montre que dans les conditions envisagées de mise en oeuvre et de rendement énergétique des diodes disponibles la puissance électrique de préférence ne doit pas dépasser 2w, et le plus souvent ne doit pas dépasser 1w ou même 0,5w. Dans la perspective de l'évolution vers de meilleurs rendement énergétique, autrement dit pour une part moindre de la puissance dissipée sous forme thermique, la puissance pourrait être accrue sans risque. La poursuite de cette évolution peut conduire à utiliser des diodes allant jusqu'à 4 ou même 5w.

A puissance électrique donnée, le flux lumineux des diodes peut varier dans une large mesure. Pour ne pas devoir multiplier de façon inutile le nombre des diodes nécessaires, et compliquer leur intégration dans le feuilleté, la puissance des diodes utilisées n'est pas inférieure à 151m/w et de préférence pas inférieure à 401m/w et de façon particulièrement préférée pas inférieure à 751m/w. A l'inverse il est préférable de ne pas accroître de façon excessive leur puissance pour ne pas risquer un échauffement préjudiciable à leur longévité et/ou l'altération des constituants du feuilleté. La puissance individuelle des diodes reste avantageusement inférieure à 100 lumens par watt électrique.

La puissance lumineuse requise peut varier sensiblement selon les véhicules et l'utilisation concernée (liseuse, éclairage d'ambiance ou d'accueil).

A titre indicatif, pour une liseuse l'éclairage requis est de l'ordre de 20 à 100 lux soit un flux lumineux sur l'objet éclairé, fonction de la configuration de l'habitacle du véhicule, qui n'est pas inférieur à 1lm, de préférence pas inférieur à 21m et peut s'élever à 501m ou plus. Pour l'éclairage d'ambiance de l'habitacle la puissance lumineuse est normalement un peu moindre. L'éclairage ordinairement n'est pas inférieur à 1lux et peut s'élever à 10 lux ou plus. Dans ces conditions le flux lumineux pour l'éclairage d'ambiance pour l'ensemble de l'habitacle peut aller de 2 à 601umens.

Un autre facteur influant sur l'éclairage, est lié l'orientation du flux lumineux. Pour les diodes les plus usuelles l'émission se fait dans tout l'espace faisant face à la diode. Pour cela la diode comporte un élément réflecteur qui dirige le flux d'un seul côté. A noter que si des diodes peuvent être munies de moyens optiques qui concentrent et dirigent le flux lumineux émis, ces moyens sont inopérants quand ils sont inclus dans un milieu d'indice de réfraction voisin. Ces optiques constituées de matériaux synthétiques de type résine époxy, ne présentent pas de différence d'indice suffisante avec les matériaux thermoplastiques des intercalaires du feuilleté comme le polyvinyl-butyral. En conséquence, maîtriser la directivité du faisceau implique avantageusement l'utilisation de moyens supplémentaires. Des exemples de modalités de mise en oeuvre sont présentés plus loin.

En pratique, pour les applications liseuses, la puissance des diodes est choisie en tenant compte de l'absorption des constituants du vitrage, de telle sorte que l'intensité lumineuse émise hors du vitrage dans un angle solide de 40° normal au vitrage par chaque diode ne soit pas inférieur 10cd et de préférence pas inférieure à 15cd.

Compte tenu du flux lumineux émis par les diodes les plus appropriées disponibles, une liseuse comprend avantageusement de 2 à 20 diodes et de préférence de 6 à 15. Pour des diodes qui seraient plus puissantes, une seule d'entre-elles pourrait convenir, pour autant que son rendement soit suffisamment élevé. Pour l'éclairage général de l'habitacle, le nombre des diodes est fonction des dimensions de cet habitacle, il peut être bien supérieur au précédent. Rapporté à la surface du toit, le nombre de diodes distribuées sur ce toit, peut être avantageusement de l'ordre de 6 à 40/m², et le plus souvent de 10 à 30/m².

Qu'il s'agisse de liseuses ou d'éclairage d'ambiance, il est préférable de maintenir les diodes à une certaine distance les unes des autres pour faciliter la dispersion thermique dont elles sont le siège. Un espacement de 10mm au moins entre chaque diode est préféré, et avantageusement d'au moins 20mm.

Comme souligné précédemment, la transmission lumineuse des toits vitrés est nécessairement limitée. Cette absorption est traditionnellement obtenue par les feuilles de verre et intercalaires utilisés. Cette absorption peut aussi venir de couches absorbantes présentes sur les feuilles ou de l'utilisation de dispositifs permettant de commander divers états de transmission, ou encore de la combinaison de plusieurs de ces moyens.

Lorsque l'absorption est obtenue par les feuilles de verre et des intercalaires, globalement et/ou individuellement ces éléments sont très absorbants. Mais une forte absorption de ce type peut aussi être avantageuse dans la composition de toits comprenant des éléments de commande de la transmission, pour réduire encore la transmission lumineuse et énergétique et/ou par exemple pour contrôler la coloration du vitrage.

Dans les toits qui comportent des moyens pour faire varier la transmission de manière commandée, moyens dont il est question plus loin, l'absorption par les feuilles de verre, éventuellement celle des intercalaires peut être moindre. Les systèmes électro-commandés dans leur configuration «claire» contribuent à une absorption qui ne dépasse pas ordinairement 50%. Si la transmission souhaitée dans cet état du système électro-commandé est estimé insuffisant, les feuilles de verre et intercalaires doivent participer de manière significative à la réduction de la transmission. Cette absorption dans ce cas peut être encore très importante. Elle est de préférence d'au moins 25% et peut s'élever à 40% ou plus. L'absorption en question intervient que le dispositif soit à l'état clair ou obscur. A l'état clair il contribue à la réduction de la transmission lumineuse et énergétique, et participe éventuellement au masquage des éléments contenus dans le vitrage.

Les feuilles de verre utilisées pour constituer le feuilleté peuvent être de même composition et éventuellement de même épaisseur, ce qui peut rendre la mise en forme préalable plus facile, les deux feuilles étant par exemple bombées simultanément. Le plus souvent les feuilles sont de composition et/ou d'épaisseur différentes et dans ce cas, elles sont mises en forme de préférence séparément.

Le choix des feuilles de verre est de préférence tel que la lumière transmise comme la lumière réfléchie soit de couleur aussi neutre que possible. Globalement le vitrage présente une coloration grise ou légèrement bleutée.

La présence éventuelle d'intercalaires de couleur participe à l'absorption lumineuse. La présence de ces intercalaires de couleur ne contribue pas significativement à une diminution de la transmission énergétique. Leur utilisation peut être envisagée pour des vitrages dont les feuilles de verre globalement ne seraient pas suffisamment absorbantes. Cette situation peut se rencontrer, par exemple, lorsque pour intégrer dans le vitrage des éléments photovoltaïques, au moins la feuille de verre externe peut être une feuille de verre peu absorbante, voire de verre extra-clair. Hors cette hypothèse particulière, le plus souvent la feuille externe est une feuille de verre également absorbante, et le recours à un intercalaire coloré n'est pas nécessaire.

La feuille de verre tournée vers l'habitacle peut aussi être exceptionnellement de verre clair. Elle est le plus souvent absorbante et contribue à la réduction de la transmission énergétique globale. Lorsque sa transmission est limitée, elle permet de masquer à la vue des passagers, au moins en partie, les éléments non transparents présents dans le vitrage. C'est le cas par exemple des diodes elles-mêmes lorsqu'elles ne sont pas activées, mais il peut aussi s'agir des éléments photovoltaïques dont il est question ci-dessus, ou de tout élément incorporé dans le vitrage.

De façon préférée les deux feuilles de verre sont de couleur et la lumière émise par les diodes est en partie absorbée par la feuille de verre tournée vers l'habitacle, et par l'intercalaire dans lequel les diodes sont insérées. Pour ne pas réduire de manière trop importante la lumière émise par les diodes, la feuille de verre tournée vers l'habitacle n'absorbe pas de préférence plus de 40% de cette lumière et de préférence pas plus de 30%.

Dans le choix des feuilles de verre et des intercalaires intervient aussi la couleur en transmission et en réflexion. Pour la feuille de verre tournée vers l'habitacle, un verre particulièrement neutre en transmission est souhaitable en raison de son incidence sur la coloration du flux lumineux provenant des diodes.

Pour la constitution d'un éclairage de lecture la lumière est de préférence blanche ou très légèrement teintée. Les coordonnées colorimétriques (x,y) dans le système CIE 1931, caractérisant l'éclairage, compte tenu d'une part de l'émission des diodes mais également d'autre part de la transmission par des intercalaires et la feuille de verre tournée vers l'habitacle, sont telles qu'elles s'inscrivent avantageusement dans un périmètre défini par les points de coordonnées : (0,2600 ; 0,3450), (0,4000 ;0,4000), (0,4500 ;0,4000), (0,3150 ;0,2900), (0,2350 ;0,2500), périmètre incluant à la fois des lumières dites froides et des lumières chaudes, et de préférence dans le périmètre défini par les points de coordonnées (0,2650 ;0,3350), (0,3200 ;0,3200), (0,3100 ;0,3000), (0,2350 ;0,2500) qui vise plus précisément des lumières très faiblement colorées.

Comme indiqué précédemment on s'efforce de limiter la transmission énergétique des toits vitrés exposés au rayonnement solaire par le choix de verres qui le composent, et aussi, le cas échéant, par l'usage de couches minces réfléchissant sélectivement les infrarouges. Pour les passagers la présence de toits vitrés peut aussi conduire à ce qui est qualifié de sensation «d'épaule froide», sensation causée par une déperdition de chaleur depuis l'habitacle lorsque la température extérieure est inférieure aux températures ambiantes de confort.

Dans la pratique pour restaurer le confort des passagers les constructeurs utilisent essentiellement un vélum qui permet de couvrir de l'intérieur le vitrage sur toute sa surface. Mais la présence d'un velum, lorsqu'il est étendu, ne permet pas de bénéficier de l'éclairage incorporé dans le toit.

Pour éviter l'usage du vélum l'invention propose des toits pour lesquels la déperdition de chaleur est minimisée, et ceci sans réduction excessive de transmission lumineuse. Pour parvenir à ce résultat, l'invention propose l'application de couches low-e (couche basse-émissive) sur la face du vitrage tournée vers l'habitacle. Dans la désignation traditionnelle des faces des vitrages feuilletés il s'agit de la position 4. La numérotation des faces se fait en partant de la face exposée à l'atmosphère externe. Les couches en question font office de filtre réfléchissant sélectivement les rayons infrarouge émis depuis l'habitacle, sans constituer un obstacle important à la transmission des rayons du domaine visible de l'extérieur vers l'intérieur.

La présence de ces couches offre l'avantage de maintenir disponibles en toutes circonstances les fonctions éclairage selon l'invention.

La présence de couches minces en position 4 est choisie en dépit du fait que dans cette position les couches ne sont pas protégées contre des altérations notamment mécaniques. Il est possible de choisir des couches low-e qui offrent une résistance mécanique et chimique suffisante.

La fonction de filtre des infrarouges peut être plus ou moins «sélective». La sélectivité est définie comme le rapport de la transmission visible (TL) au facteur solaire (FS), ce dernier étant la somme de l'énergie transmise directement et de celle absorbée puis réémise à l'intérieur, selon les définitions de la norme EN 410.

Avantageusement, compte tenu de l'importance de disposer de revêtements de bonne résistance mécanique, on choisit des couches dites «dures», telles que celles produites par des techniques du type pyrolytique, CVD ou PECVD. Mais des systèmes low-e peuvent aussi être préparés par les techniques de pulvérisation cathodique sous vide, à condition que ces systèmes soient composés de couches suffisamment résistantes.

Selon l'invention il est préféré d'utiliser un système de couches basse-émissives, dont l'émissivité est inférieure à 0,3 et de préférence inférieure à 0,2, et de façon particulièrement préférée inférieure à 0,1.

Dans la préparation des toits selon l'invention de manière générale il convient de considérer les capacités des éléments constitutifs à supporter les traitements qui conduisent à la mise en forme et à l'assemblage du vitrage. Partant des éléments de base : feuilles de verre, intercalaires, circuit d'alimentation des diodes, les diodes elles-mêmes, couches basses-émissives, les traitements comprennent nécessairement la formation des couches, le bombage des feuilles, l'assemblage enfin des divers éléments.

Les toits des véhicules présentent en général des courbures relativement peu accentuées à l'exception éventuellement de celles des bords de ces vitrages. La mise en forme de feuilles de verre minéral comporte, au moins pour l'une d'entre elles, un traitement qui nécessite un passage à haute température (650-700°C) conduisant à un ramollissement du verre. Les températures en question ne sont pas supportables par les diodes et certains éléments qui leur sont associés. Les diodes doivent donc nécessairement être introduites dans le vitrage après bombage. Leur intégration reste assujettie à l'assemblage des feuilles de verre avec les feuilles intercalaires thermoplastiques.

Les conditions d'introduction des diodes doivent tenir compte de leur relative fragilité aussi bien aux températures élevées qu'aux contraintes mécaniques. L'assemblage des feuilles est obtenu ordinairement à l'étuve à une température de l'ordre de 120-130°C, et sous pression.

La nature des diodes permet normalement de supporter les températures en question pour autant qu'elles ne sont pas imposées sur de très longues périodes et/ou dans des conditions d'environnement chimique agressif. La température en question nécessite néanmoins quelques précautions en ce qui concerne le choix des matériaux assurant la connexion entre les diodes et leur circuit d'alimentation. Cette connexion est sensible à la chaleur notamment lorsqu'elle est effectuée au moyen de colles conductrices. L'usage de soudures permet le cas échéant de supporter des températures plus élevées.

Les contraintes mécaniques sont liées principalement aux pressions résultant de l'assemblage. Pour minimiser l'effet de ces pressions, il est nécessaire de disposer les diodes de telle sorte qu'elles s'insèrent dans le matériau des intercalaires sans effort excessif.

Une première condition est d'assurer que l'épaisseur d'intercalaire soit suffisante à l'insertion des diodes.

Les diodes usuelles avec leur enveloppe («packaging») ont ordinairement des hauteurs de moins de 1,5mm et le plus souvent de moins de 1mm, voire moins de 0,7mm. Les hauteurs en question sont parfaitement compatibles avec l'épaisseur des intercalaires traditionnels utilisés. A titre indicatif les feuilles de PVB sont commercialement disponibles en épaisseur de 0,76mm et 0,38mm. En outre il est classique dans ces vitrages feuilletés d'associer plusieurs feuilles intercalaires en fonction des besoins. Selon l'invention l'épaisseur des intercalaires est donc au moins égale à la hauteur des diodes. Par précaution supplémentaire l'épaisseur d'intercalaire destiné à envelopper les diodes est choisie supérieure à la hauteur des diodes, par exemple 1,5 fois cette hauteur ou davantage sans excéder ce qui est nécessaire pour ne pas accroître inutilement l'épaisseur totale du vitrage.

La résistance mécanique des diodes, et plus encore de leur liaison avec le circuit d'alimentation, doit permettre leur insertion dans le matériau des intercalaires au cours de l'assemblage. Le packaging ordinaire de céramique est bien résistant. Le ramollissement du matériau intercalaire au passage dans l'étuve est habituellement suffisant pour permettre l'insertion des diodes par simple pression.

La mise en oeuvre décrite précédemment peut être remplacée par celle moins usuelle dans laquelle l'intercalaire serait constitué à partir d'un matériau appliqué sous forme fluide à température ambiante, avant de procéder à son durcissement, par exemple par réticulation, une fois les différents éléments mis en place.

Le circuit d'alimentation des diodes peut être constitué de différentes manières. Une d'entre elles consiste à disposer des fils minces qui sont avantageusement introduits dans l'intercalaire avec les diodes comme décrit dans EP1979160. La présence de fils très fins n'est pratiquement pas perceptible dans la mesure où les vitrages présentent systématiquement une transmission lumineuse réduite. La difficulté principale pour ce mode de réalisation consiste dans la mise en place des diodes dans l'intercalaire.

Il est préféré, selon l'invention de disposer le circuit d'alimentation et les diodes sur un support distinct des matériaux intercalaires. Il peut s'agir d'une des feuilles de verre du feuilleté, pour autant que cette feuille n'ait pas à subir de traitement thermique du type mis en oeuvre pour le bombage. Une façon consiste par exemple à bomber une feuille revêtue d'une couche conductrice. Dans cette couche, le circuit d'alimentation est formé, avant ou après bombage. Une fois la feuille bombée les diodes sont disposées aux emplacements appropriés sur le circuit d'alimentation. La mise en place des diodes sur un substrat incurvé reste cependant une opération qui se prête difficilement à automatisation.

Une alternative consiste à procéder à la formation d'un vitrage feuilleté associant une feuille bombée relativement épaisse à une feuille plane de moindre épaisseur qui est mécaniquement forcée pour épouser la courbure de la feuille épaisse. La mise en oeuvre de cette technique n'est envisagée que dans l'hypothèse où les courbures imposées restent relativement modestes compte tenu des contraintes supportables notamment par les feuilles de verre. Ce type d'assemblage est par exemple tel que décrit dans la demande BE20110415 (déposée le 4/7/2011) ou encore dans la demande BE20120036 (déposée le 16/1/2012). Dans le cas de ce type d'assemblage le circuit d'alimentation et les diodes sont disposés sur la feuille plane et l'élévation de température à laquelle ils sont exposés n'est que celle du passage à l'étuve.

Pour ce mode d'assemblage la feuille de verre plane est avantageusement une feuille de verre trempé chimiquement.

Dans un feuilleté tel qu'assemblé comme décrit ci-dessus, il est possible de disposer la feuille plane soit vers l'extérieur soit vers l'intérieur. Pour minimiser les risques liés à l'impact de gravillons, il peut être préféré de disposer la feuille portant le circuit et les diodes, par hypothèse plus mince, vers l'intérieur. Le fait que par cette position, la face de la feuille portant les diodes et le circuit d'alimentation soit sur la face convexe provoque des contraintes en extension. Ceci n'entraîne pas de difficultés particulières en raison de ce que les courbures restent faibles et les contraintes limitées. Une particularité néanmoins concerne le type de diodes utilisé. Il est en effet nécessaire de diriger le flux lumineux du côté correspondant au support des diodes constitué par la feuille de verre. Dans ce cas les diodes utilisées sont nécessairement du type «reverse».

Dans le mode d'assemblage présenté ci-dessus, la couche conductrice servant à la confection du circuit d'alimentation est formé sur la feuille mince. L'application des couches n'est pas chose aisée lorsque les feuilles de verre concernées sont très peu épaisses (par exemple de 0,8mm ou même de l'ordre de 0,4mm). Les techniques habituellement utilisées pour constituer ces couches induisent des défauts notamment en raison de la difficulté qui est de bien maîtriser la planéité des feuilles. au stade de l'application des couches.

Compte tenu de la difficulté de manipuler des feuilles relativement minces de grandes dimensions sur lesquelles les diodes sont préalablement fixées, il est possible de procéder d'une manière différente. Il s'agit d'introduire dans le feuilleté un élément indépendant des feuilles de verre et des intercalaires proprement dits. Dans ce mode le circuit et les diodes sont disposés sur un élément support de faible épaisseur qui est inséré dans le feuilleté. Les dimensions de cet élément support peuvent être relativement petites par rapport à la surface du toit. Elles se limiteront avantageusement à ce qui est nécessaire pour la disposition appropriée des diodes. Pour une liseuse par exemple le support peut se limiter à une surface de l'ordre de quelques décimètres carrés ou moins.

Le support est avantageusement constitué par une feuille souple polymère. La feuille en question présente avantageusement une résistance à la déformation suffisante pour maintenir l'orientation des diodes lors de leur insertion dans le matériau intercalaire. La feuille peut être composée de plusieurs matériaux superposés. Elle peut notamment comprendre une feuille de poly-téréphtalate d'éthylène glycol (PET) ou analogue servant de support au circuit conducteur. Des feuilles de ce type revêtues d'un système de couches conductrices sont disponibles dans le commerce. Pour ces éléments polymères la fixation des diodes ne peut se faire que sans élévation notable de la température en raison de fragilité du matériau en question. La fixation est faite par exemple au moyen de colle conductrice. Les feuilles PET sont très résistantes à l'étirement, mais sont très souples. Elles sont donc avantageusement associées à une feuille d'un matériau moins facilement déformable en flexion pour faciliter la mise en bonne position des diodes.

L'élément support du circuit et des diodes peut aussi être avantageusement constitué d'une lame de verre de faible épaisseur. Compte tenu des dimensions, qui peuvent être limitées, la lame peut être d'épaisseur particulièrement petite, par exemple de l'ordre de 0,1mm. Des feuilles d'épaisseur aussi faible présentent l'avantage d'être facilement déformables pour s'adapter aux courbures du toit feuilleté. Pour améliorer la résistance à la flexion ces feuilles sont comme précédemment avantageusement trempées chimiquement. Par ailleurs les éléments en verre peuvent supporter des températures compatibles avec la fixation par soudure des diodes au circuit.

Les support insérés dont il est question ci-dessus sont de matériaux essentiellement transparents. Ils ne modifient pas sensiblement les caractéristiques de transmission lumineuse du toit. En raison des dimensions modestes de ces supports, et dans l'hypothèse où il est acceptable d'avoir des parties non transparentes, il est possible d'utiliser des matériaux traditionnels dans la constitution de circuits électronique du type PCB (« printed circuit board »), ces produits présentant l'avantage d'être très peu coûteux.

L'insertion du support des diodes est de préférence facilitée par la mise en place d'un logement aménagé dans la ou les feuilles intercalaires. Ce mode est traditionnellement proposé pour l'insertion d'éléments variés, notamment de cellules photovoltaïques dans des vitrages feuilletés, y compris dans des toits comme dans EP1171294. C'est aussi un mode proposé dans WO 2005/102688 pour des ensembles de type SPD destinés à faire varier la transmission lumineuse.

La composition des circuits d'alimentation doit satisfaire à plusieurs exigences. En premier si comme il est préféré pour conserver au mieux l'uniformité de transparence on utilise un support des diodes qui est transparent, le circuit d'alimentation sera lui-même de préférence tel qu'il ne modifie pas sensiblement la transmission lumineuse, ou, plus précisément que sa présence reste pratiquement indécelable visuellement. Dans ce cas le circuit est par exemple constitué dans un revêtement conducteur essentiellement transparent. Mais des fils très fins peuvent aussi être utilisés.

Pour les circuits transparents on utilise avantageusement des couches minces conductrices du type dit «TCO» (thin conductive oxide), ou des systèmes comportant au moins une couche métallique. Ces couches conductrices se présentent sous de très faibles épaisseurs et sont utilisées dans de nombreux domaines, dont en particulier celui des cellules photovoltaïques. Pour les couches d'oxydes, la conductivité est moins élevée qu'avec les couches métalliques ce qui conduit ordinairement à des épaisseurs sensiblement plus importantes. Dans tous les cas, même pour des épaisseurs de plusieurs dizaines de nanomètres, l'incidence limitée sur la transmission lumineuse n'est pas gênante compte tenu de ce que la transmission globale très faible du vitrage lui-même.

Le choix des couches conductrices doit aussi tenir compte de leurs caractéristiques électriques. Les couches d'oxydes conducteurs ont ordinairement des conductivités relativement faibles, autrement dit des résistances non négligeables. Les couches d'oxydes conducteurs ont par exemple une résistance de l'ordre de 10Ω/□ ou plus. Les systèmes comportant des couches métalliques ont des résistances moindres, de l'ordre de 1 à 5Ω/□, mais présentent une certaine fragilité qui fait, qu'en dépit de leurs qualités les couches d'oxydes conducteurs restent préférées.

Dans la pratique il est important de maintenir la résistivité de la couche à un niveau suffisamment bas pour ne pas avoir un effet Joule trop important. Comme pour les diodes, il faut éviter un échauffement complémentaire d'autant plus important que la résistance est plus élevée, même si la chaleur produite se distribue sur toute la surface occupée par la couche conductrice.

Le circuit électrique alimentant les diodes est formé sur la couche conductrice de manière traditionnelle. Pour un support constitué d'une mince lame de verre, un mode usuel consiste par exemple au découpage de la couche préalablement recouvrant uniformément le support. Cette découpe est avantageusement effectuée par ablation au moyen d'un laser. Pour des supports constitués de films minces comme ceux de PET, le circuit est de préférence constitué par des techniques d'impression.

Dans le conditionnement traditionnel le flux lumineux émis par les diodes se distribue sur un faisceau de large ouverture, qui peut atteindre 180°, et est d'au moins 120° selon l'enveloppe utilisée. L'éclairage d'ambiance ou d'accueil, s'accommode bien cette particularité lorsqu'elle est combinée avec une distribution régulière des diodes sur l'ensemble du toit.

Si le faisceau lumineux est largement ouvert, son intensité n'est pas uniforme dans toutes les directions. Elle est la plus forte dans la direction normale au plan du semi-conducteur de la diode, et décroît jusqu'à son ouverture la plus large. Cette distribution est détaillée plus loin à propos d'un exemple et de la figure qui s'y rapporte.

Même si l'intensité est la plus élevée dans une direction qui peut être choisie par l'emplacement des diodes dans le toit, cette «directivité» partielle intrinsèque peut ne pas être suffisante. La formation d'un flux dirigé de façon à obtenir un faisceau d'ouverture angulaire réduite peut être préférée.

Pour réduire l'ouverture du faisceau lumineux provenant d'une ou plusieurs diodes, il est avantageux de constituer en regard de celles-ci une optique convergente. Si cette optique est d'origine sur la diode, pour qu'elle reste efficace dans le feuilleté, son indice de réfraction doit différer de celui du matériau intercalaire dans lequel elle est insérée. Les produits les plus répandus disposent une optique en résine époxy dont l'indice de réfraction ne diffère pas sensiblement de celui des matériaux intercalaires usuels. Dans cette situation pour obtenir la convergence requise, l'optique est disposée non sur la diode mais sur la face du vitrage tournée vers l'habitacle, donc en position 4. L'optique en question dans son principe peut être partie intégrante de la feuille de verre elle-même par une modification de sa surface. Néanmoins pour des raisons d'économie de mise en oeuvre il est avantageux de disposer l'optique sous forme d'une pièce rapportée qui est disposée en face des diodes. La pièce en question est conçue dans un matériau transparent qui peut être de verre, mais aussi le cas échéant d'un matériau polymère suffisamment transparent et résistant.

Pour minimiser la protubérance vers l'habitacle, résultant de la présence de cette optique rapportée, la forme lentille de Fresnel est préférée. Avec une telle optique il est possible de choisir l'angle d'ouverture du faisceau qui correspond le mieux avec la dimension de la zone que l'on souhaite éclairer. Pour des liseuses, une ouverture de 15 à 40° permet d'ajuster les dimensions de la zone éclairée compte tenu de la distance séparant la source de cette zone de lecture.

Pour un éclairage directionnel fixe, l'optique est disposée sur la face interne de la feuille de verre tournée vers l'habitacle et collée à cette face de façon non modifiable. Il est possible aussi d'envisager un faisceau orientable dont la direction puisse être modifiée par exemple par translation de l'optique sur la face de la feuille de verre. Un tel moyen impose la présence d'un dispositif qui nécessairement ajoute à la protubérance à la surface de la feuille.

Le faisceau lumineux peut être limité comme indiqué précédemment par une sorte de diaphragme associé par exemple à chaque diode. Cette façon de procéder, contrairement au dispositif optique, ne permet de récupérer qu'une fraction limitée du flux émis. Il est aussi possible de combiner l'usage du diaphragme et d'une optique telle qu'indiquée ci-dessus.

Disposer sur un véhicule d'un toit vitré vise au moins en partie un objectif de nature esthétique autant que fonctionnelle. Pour cette raison il est préférable que tous les moyens associés à ces toits contribuent à la réalisation de cet objectif. La présence de moyens d'éclairage inclus dans le toit doit s'accompagner nécessairement d'une alimentation spécifique et de commandes de ces moyens.

L'alimentation des diodes requiert une tension spécifique. Comme indiqué précédemment cette tension est de l'ordre de quelques volts (2 à 4v le plus souvent). Elle doit nécessairement comprendre des moyens d'ajustement de la tension qui alimente les autres organes du véhicule, ceux-ci selon qu'il s'agit de voitures ou de gros utilitaires de l'ordre de 12 à 14v ou de l'ordre de 48v. Les moyens de conversion de la tension, même miniaturisés, ne peuvent être inclus dans le feuilleté du vitrage. Dans un souci de rassembler tous les éléments participant à la fonction le, ou les transformateurs nécessaires peuvent être disposés à proximité du vitrage. Avantageusement le transformateur est disposé sous la zone émaillée qui masque les bords du vitrage.

La commande de l'éclairage peut comprendre de simples interrupteurs. Dans les modes traditionnels d'éclairage les interrupteurs sont situés à proximité immédiate des moyens d'éclairage pour éviter des circuits complexes et faciliter l'identification du moyen actionné. Les interrupteurs traditionnels ne répondent pas au souci de transparence à l'origine du choix des toits vitrés.

L'invention propose d'utiliser des moyens de commande des diodes qui soient également essentiellement transparents. A cet effet l'invention propose d'utiliser des interrupteurs dont la mise en oeuvre soit déclenchée par l'intermédiaire de relais actionnés par une impulsion liée à une grandeur électrique. De préférence l'interrupteur utilisé est du type capacitif. Ce mode est celui qui permet d'utiliser au mieux la structure même des éléments inclus dans le toit avec les diodes.

A titre indicatif un capteur capacitif peut être du type à contact direct. L'élément sensible est par exemple une zone délimitée dans la couche low-e située sur la face tournée vers l'habitacle. Les couches low-e étant conductrices peuvent servir de capteur pour la commande du relais d'interruption. L'avantage du contact direct est que la modification de capacité induite par contact peut être relativement importante de sorte que le seuil commandant l'interrupteur peut être suffisamment élevé pour écarter tout déclenchement parasite.

Le capteur peut aussi être à contact indirect. Dans ce cas le capteur est situé à l'intérieur du vitrage. Avantageusement le capteur est incorporé à la couche conductrice dans laquelle le circuit d'alimentation des diodes est constitué. Ce capteur est par exemple constitué par une zone délimitée indépendante du circuit d'alimentation des diodes. La modification de capacité est alors induite indirectement par modification du champ électrique en approchant la main de l'emplacement de l'électrode dans le vitrage. Le fait qu'une feuille de verre soit interposée limite la modification induite et par suite nécessite que le seuil de détection soit abaissé conduisant éventuellement à une sensibilité accrue aux déclenchements parasites.

Il convient notamment dans le réglage de la sensibilité de faire en sorte que le seuil de déclenchement soit supérieur à celui qui correspond par exemple à la présence d'eau sur la feuille de verre extérieure. Une couche conductrice mise à la terre et interposée permet d'éviter les effets parasites. Cette couche conductrice peut être elle-même transparente.

Dans les modalités de réalisation des circuits conducteurs alimentant les diodes, il est préféré que ceux-ci soient peu ou pas discernables dans le toit. Si un capteur capacitif est constitué comme indiqué ci-dessus dans la couche conductrice, celle-ci n'est pas non plus facilement discernable. La localisation de cet «interrupteur» par l'utilisateur peut être facilitée de manière tactile. La présence de moyen optiques protubérants, notamment de type lentille de Fresnel à la surface de la face intérieure du toit en est un exemple, mais un simple dépoli peut suffire. Il est aussi possible de localiser le capteur de manière optique par adjonction d'une diode de très faible intensité alimentée de manière permanente dès que le contact du véhicule est actionné, ou encore de façon analogue en maintenant le fonctionnement de la liseuse mais à un niveau de fonctionnement très faible.

Les modes de réalisation de l'invention précédemment proposés concernent la combinaison des moyens d'éclairage dans des toits constitués de feuilles de verre qui permettent de fixer certains niveaux de transmission lumineuse et énergétique. Les vitrages selon l'invention peuvent comprendre des moyens qui permettent de faire varier à volonté ces transmissions et surtout la transmission lumineuse. Des moyens à cette fin, comme indiqué précédemment, sont notamment les dispositifs électro-chromes. Ce sont aussi et de préférence les systèmes SPD.

Les toits dont la transmission lumineuse est modifiée par la mise en oeuvre de SPD sont particulièrement intéressants en raison de leur réponse très rapide à la commande. La variation de la transmission lumineuse obtenue avec ces SPD entre les deux états «clair» et «obscur», dépend des systèmes choisis. Dans les produits usuels de ce type, la variation de transmission entre ces deux états peut atteindre 40% ou plus, avec dans l'état obscur une transmission qui peut être extrêmement faible. Par ailleurs la présence de ces systèmes conduit aussi à une transmission énergétique très réduite quel que soit l'état clair ou obscur dans lequel ils sont. Cette réduction de la transmission énergétique est notamment liée aux dispositions prises pour éviter de soumettre les éléments fonctionnels que sont ces particules orientables à une élévation trop forte de la température. Elle est encore liée au fait qu'une part significative de l'énergie accompagne les longueurs d'onde du visible. Réduisant la transmission dans le visible conduit automatiquement à une réduction de la transmission énergétique.

Les composants SPD étant relativement fragiles l'exposition à la chaleur, il est particulièrement important dans la mesure où les diodes seraient situées à proximité immédiate, que leur fonctionnement ne produise pas une élévation trop élevée de la température. Le choix de la puissance et de la répartition des diodes à distance les unes des autres, comme indiqué précédemment permet de satisfaire cette condition.

Lorsque les diodes se situent dans le même périmètre que le film SPD, les diodes sont situées sous ce film, autrement dit plus vers l'habitacle, de telle sorte que la lumière émise ne soit pas absorbée pour une partie significative par le film que celui-ci soit dans l'état «obscur» ou dans l'état «clair».

L'invention est décrite de manière détaillée en se référant aux exemples illustrés par les planches de dessins dans lesquelles :
- la figure 1 représente schématiquement en perspective éclatée un ensemble partiel d'éléments entrant dans la constitution d'un toit selon l'invention ;
- la figure 2 est un schéma en coupe d'un support des diodes ;
- la figure 3 représente de manière schématique un circuit d'alimentation pour 8 diodes ;
- la figure 4 est un schéma illustrant une distribution de l'intensité lumineuse dans un faisceau émis à partir d'une diode ;
- la figure 5 représente un mode de contrôle du faisceau lumineux ;
- la figure 6 montre de manière schématique un mode de réalisation dans lequel le vitrage comporte un système de couches basses-émissives ;
- la figure 7 présente en perspective éclatée, des éléments d'un vitrage comportant un ensemble SPD ;
- la figure 7a montre un détail du film SPD de la figure 7 ;
- la figure 7b montre de manière schématique des éléments de protection d'un ensemble SPD ;
- la figure 8 présente sur le diagramme de colorimétrie CIE 1931 les périmètres préférés des couleurs du faisceau lumineux d'éclairage selon l'invention .

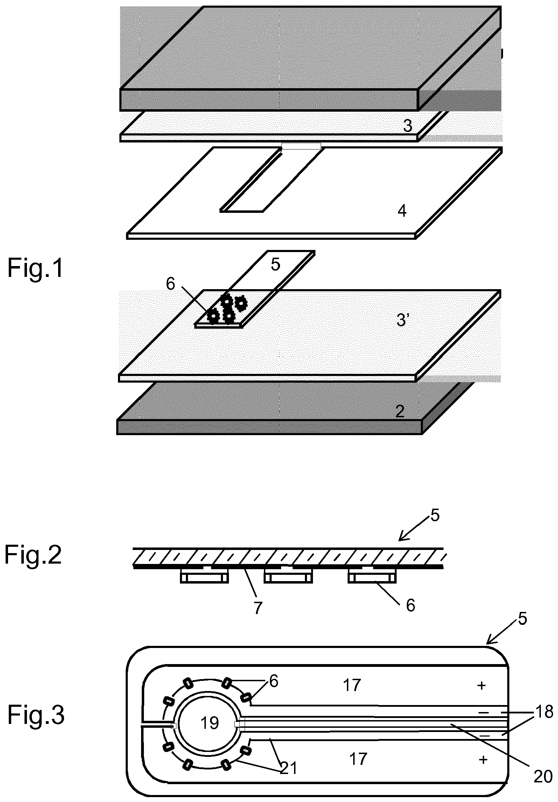

L'ensemble des éléments de la figure 1 est un exemple de réalisation selon l'invention. Les éléments sont présentés tels qu'avant leur assemblage. Sur cette figure les courbures des feuilles ne sont pas reproduites par souci de simplicité. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush» correspondant à une bonne continuité de surface entre les éléments contigus.

Dans la pratique les vitrages occupent une part croissante des toits, jusqu'à couvrir dans certains cas, la presque totalité de ces toits. Le cas échéant, compte tenu des dimensions, les toits comportent plusieurs panneaux juxtaposés pour couvrir le plus possible de surface. Dans ce cas les différentes parties peuvent être constituées de vitrages offrant la même composition, autrement dit offrant les mêmes fonctionnalité, ils peuvent aussi être dédiés à des fonctions distinctes. A titre indicatif, il est possible de trouver sur un même toit une partie comportant des cellules photovoltaïques, et par suite essentiellement opaque à la transmission lumineuse, et une autre partie qui a pour rôle d'aménager une certaine transmission lumineuse.

Le vitrage de la figure 1 comprend deux feuilles de verre, externe 1, et interne 2. Le plus fréquemment ces deux feuilles sont de verre coloré fortement absorbant, de telle sorte que la transmission lumineuse soit limitée par exemple à moins de 50%, et dans une configuration de ce type de préférence à moins de 30% . Les deux feuilles peuvent être de même composition ou non, mais leur coloration combinée est telle que la couleur en transmission soit neutre.

Des verres utilisés pour ces feuilles sont par exemple les verres gris tels que décrits dans le brevet FR2738238 ou dans le brevet EP1680371, ou des verres gris à nuance verte tel que décrits dans EP 887320, ou à nuance bleu comme dans EP1140718.

A la figure 1, les feuilles de verre sont présentées sans les motifs émaillés qui traditionnellement sont utilisés pour masquer les bords des vitrages. Des émaux de ce type seraient par exemple disposés sur la face interne de la feuille 1, donc en position 2, dissimulant l'ensemble des collages et connexions localisés au bord du vitrage. Les émaux de masquage peuvent aussi être en position 4, autrement dit sur la face du vitrage exposée à l'intérieur de l'habitacle. Mais dans cette position, pour une observation de l'extérieur du véhicule, ils ne masquent pas les éléments inclus dans le feuilleté. Il est aussi possible de disposer les masquages en position 2 et en position 4.

Dans l'exemple présenté, le support des diodes 6 est constitué par une lame de verre clair 5 (par exemple de 0,4mm d'épaisseur). Les diodes 6, sont soudées ou collées sur le circuit d'alimentation constitué dans une couche d'oxyde conducteur non représentée. La hauteur des diodes sur la lame de verre 5 est par exemple de 0,6mm.

Des feuilles de matériau thermoplastique 3 (épaisseur 0,38mm), 3' (épaisseur 1,14mm) et 4 (épaisseur 0,38mm), de type PVB complètent l'ensemble. Les feuilles 3, 3' et 4 sont également transparentes. Pour faciliter l'insertion de la lame 5 portant les diodes la feuille 4 est d'épaisseur voisine de celle de la lame 5, et comporte une découpe correspondant aux dimensions de cette lame.

A l'assemblage les feuilles intercalaires soumises à l'étuve et sous vide, se collent les unes aux autres et aux feuilles de verre. Le vide maintenu permet l'évacuation des bulles d'air qui pourraient être emprisonnées.

Dans l'assemblage le matériau intercalaire est suffisamment ramolli pour que les diodes pénètrent dans la feuille 3' sans nécessiter de pression excessive. La position des diodes fixées sur la feuille 5 reste celle qui est la leur avant cet assemblage.

Les feuilles de verre 1 et 2 sont respectivement de 2,1mm et 2,1 mm d'épaisseur. Le vitrage assemblé présente une épaisseur totale de 6,1mm.

La feuille 1 est d'un verre vert dont les caractéristiques optiques sont sous 4mm d'épaisseur et un illuminant A:
TL A4 27,3% ; TE4 14,8 % ; λ_{D} 486nm ; P 18
(λ_{D} est la longueur d'onde dominante et P est la pureté d'excitation).

La feuille 2 est de verre gris dont les caractéristiques sont :
TL A4 17% ; TE4 15 % ; λ_{D} 490nm ; P 1,8

Le vitrage assemblé présente les caractéristiques optiques suivantes :
TL A 19% ; TE 12% ; λ_{D} 493nm ; P8 ; et un indice de rendu des couleur de 78.

La figure 2 représente de manière schématique en coupe la lame de verre 5 sur laquelle est appliquée la couche conductrice 7 découpée de manière à constituer le circuit d'alimentation des diodes 6. Les diodes sont soudées à cette couche. Elles sont rassemblées sur une surface limitée pour conduire à un faisceau concentré de puissance suffisante. Le circuit conducteur est constitué de manière à séparer les pôles d'alimentation, chaque diode étant soudée à chacun des deux pôles.

Un circuit schématique est par exemple présenté à la figure 3. La lame 5 vue de dessus, comporte une couche conductrice qui est appliquée sur la majeure partie de la lame. La couche est divisée pour constituer le circuit d'alimentation des diodes représentées en 6. La couche est en deux parties symétriques conservant une large surface pour dissiper le plus possible la chaleur produite dans cette couche par effet Joule. Les dimensions des surface de ces conducteurs sont déterminées également de manière à garantir un courant d'alimentation pratiquement identique pour chacune des diodes. La disposition de celles-ci qui est du type en «parallèle» le long de ces conducteurs peut conduire à une différence du courant traversant les différentes diodes. La configuration des électrodes est choisi de façon à minimiser ces différences et la puissance délivrée. Chaque partie alimente 4 diodes et est elle-même divisée en deux (17 et 18) correspondant chacune à un pôle d'alimentation (+, -). Les diodes 6 sont chacune reliée aux deux pôles.

Pour former le circuit la couche 7 s'étend initialement de manière uniforme sur toute la surface de la feuille de verre 5 avec éventuellement des bords non revêtus. La séparation des différentes zones dans cette couche est obtenue selon des lignes 21, tracées dans cette couche par exemple par ablation au moyen d'un laser par des méthodes antérieures bien connues. La largeur de l'ablation est limitée à ce qui est nécessaire pour garantir que les zones sont bien isolées électriquement les unes des autres.

La distribution des diodes est faite en sorte de répartir le mieux possible la chaleur produite en cours de fonctionnement. Les diodes sont espacées les unes des autres, mais à distance limitée par la nécessité de rassembler l'émission lumineuse résultante. Dans l'exemple les diodes sont disposées en cercle de diamètre 6cm.

A titre d'exemple la couche conductrice est une couche ITO («indium tin oxide») de 10Ω/□ de résistance. La couche ITO est intéressante notamment en raison de sa neutralité de couleur. Elle ne modifie pas sensiblement l'aspect en transmission notamment.

La figure 3 présente aussi une électrode 19 découpée dans la couche conductrice, comme le circuit d'alimentation des diodes. Cette électrode est reliée à un ensemble commandant l'interrupteur des diodes dans un circuit de type à variation de capacité. Le temps de charge de l'électrode est commandé par sa capacité elle-même variant en fonction des éléments conducteurs placés à proximité et qui modifient le champ électromagnétique. Le mouvement de l'opérateur dans ce sens, déclenche ainsi un relais interrupteur des diodes. Le cas échéant le circuit de façon connue peut aussi comprendre un variateur («dimmer») conduisant à différents niveaux d'alimentation pour un éclairage d'intensité variée, chaque impulsion faisant passer d'un niveau à un autre.

Pour limiter les déclenchements parasites, le conducteur 20 de raccordement de l'électrode 19 au dispositif non représenté, est de surface aussi faible que possible. De même si la sensibilité de l'électrode 19 est telle que la notamment la présence d'eau sur le toit est détectée comme une commande de l'éclairage, un écran conducteur relié à la masse, est avantageusement interposé entre cette électrode et l'extérieur du toit. Cet écran peut prendre la forme d'une couche mince conductrice. Cette couche mince peut par exemple recouvrir l'autre face de la lame 5. Eventuellement l'électrode 19 et le conducteur 20 qui la relie au dispositif d'interrupteur peuvent être entourés d'une zone conductrice découpée aussi dans la couche et reliée à la masse, pour réduire aussi l'incidence possible de champs électriques voisins.

Les conditions fixées pour une liseuse sont par exemple de disposer d'un éclairement donné suffisant sur une surface et à une distance déterminées. Dans un exemple la distance est de 0,6m entre le toit et la surface à éclairer laquelle est fixée à un cercle de rayon 0,25m. L'éclairage minimum requis sur cette surface est par exemple de 55 lux.

Dans l'exemple considéré les diodes mises en oeuvre sont de marque Nichia de type NS2W150A. Il s'agit de diodes de moyenne puissance produisant une lumière «blanche froide». Elles sont alimentées sous une tension de 3,2v et chacune sous une intensité de 0,100A.

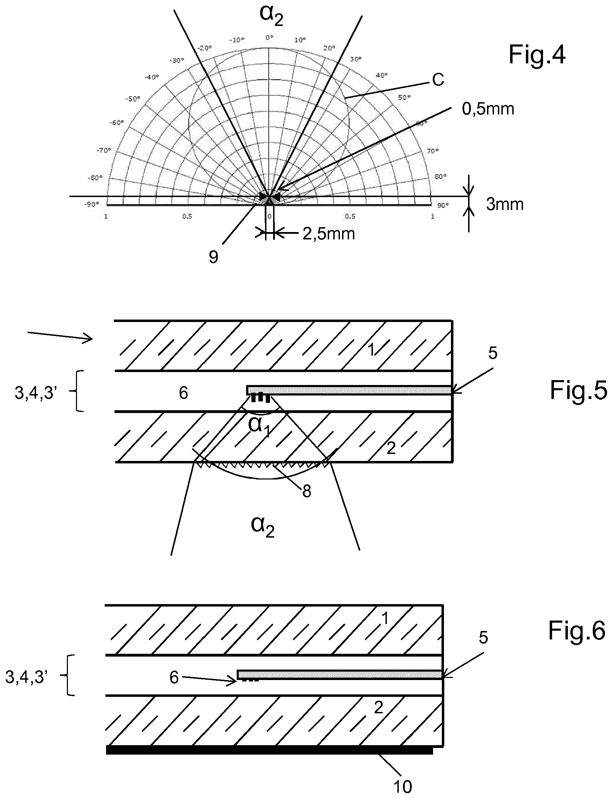

L'intensité lumineuse donnée par le fabricant est de 17,4cd pour une intensité de 0,150A. On peut estimer sur le domaine considéré que l'intensité lumineuse est à peu près proportionnelle à l'intensité électrique. Cette intensité lumineuse selon la normale à la diode s'établit donc à environ 11,6cd. Elle varie selon la direction considérée de la manière présentée au graphique de la figure 4. Ainsi sans moyen optique modifiant la direction du flux lumineux, pour l'angle de 23° de part et d'autre de la normale, qui correspond approximativement à la zone éclairée recherchée pour les conditions indiquées ci-dessus, l'intensité lumineuse pour une diode est d'environ 10,45cd. Il tenir compte de l'incidence de l'insertion des diodes dans le feuilleté, et notamment des réflexions et de l'absorption lumineuse sur le trajet du faisceau. Finalement pour atteindre l'éclairement nécessaire il faut de l'ordre de 8 diodes de ce type pour constituer la liseuse.

Le fait d'utiliser une pluralité de diodes de puissance limitée en dehors du contrôle de l'échauffement local, réduit aussi l'effet d'éblouissement qui peut provenir d'une observation directe des diodes. Cet effet peut encore être minimisé en favorisant une certaine diffusion du faisceau lumineux par exemple par un dépoli de la feuille interne à l'emplacement correspondant aux diodes.

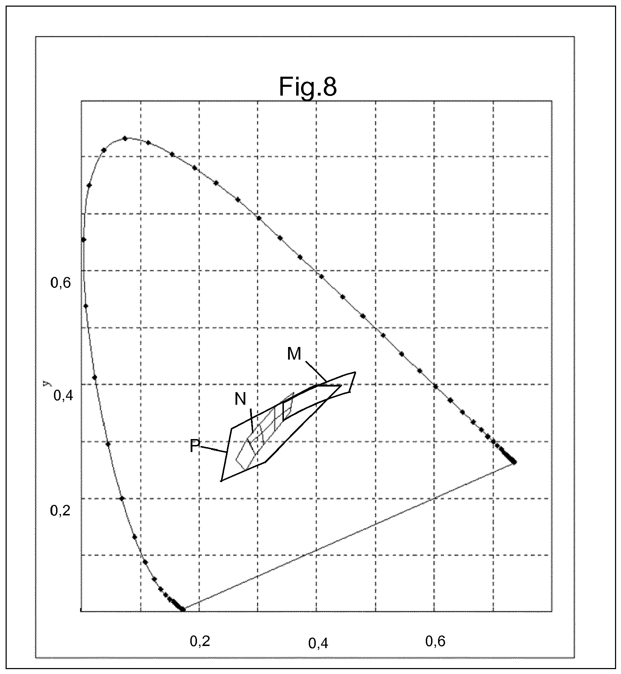

Le flux lumineux émis par les diodes se caractérise par des coordonnées colorimétriques reportées sur le diagramme de la figure 8 et représenté par les limites désignées globalement par N. Le domaine tel que présenté par le fabriquant est subdivisé en parties correspondant à des classes distinctes laissées au choix de l'utilisateur. Le fabriquant propose le cas échéant un tri préalable pour que toutes les diodes se situent dans une seule de ces parties. Cette sélection qui permet d'affiner la couleur s'accompagne d'un coût supplémentaire. Sur le même graphique est reporté le périmètre P correspondant à la couleur préférée selon l'invention. A noter que cette couleur qui recouvre en grande partie celle des diodes, tient compte aussi de l'incidence de la feuille de verre qui est interposée entre les diodes et l'habitacle, et éventuellement de l'intercalaire si celui-ci est choisi de couleur.

Dans l'exemple précédent les diodes émettent un flux de lumière blanche légèrement bleutée qui est qualifiée de «froide». Si une lumière «chaude» est préférée, on peut choisir un produit de même type comme celui de Nichia référencé NS2L150A. Le spectre de ces diodes correspond au périmètre désigné par M.

Comme indiqué précédemment des diodes plus puissantes sont éventuellement utilisées, mais en dehors d'un coût supplémentaire, elles ont l'inconvénient d'une moindre longévité.

La disposition des 8 diodes dans le feuilleté ne conduit pas à un échauffement dommageable. Pour un fonctionnement continu dans une atmosphère immobile à température ambiante de 25°C, le vitrage étant disposé en position sensiblement horizontale, la température s'élève jusqu'à environ 35°C. Ces températures n'altèrent ni les diodes, ni les composants du vitrage.

Sans moyen de concentration le flux lumineux émis par les diodes choisies se distribue de la façon représentée au graphique de la figure 4. Sur ce graphique figure à l'horizontale l'échelle des intensités lumineuses. Les demi-cercles concentriques présentent les fractions d'intensité de de 0 à 100% de l'intensité la plus forte qui se situe à la verticale. L'intensité est lue sur le graphique à l'intersection de la droite correspondant à la direction avec le cercle C. L'intensité lumineuse décroît rapidement avec un angle croissant par rapport à la normale à la source. Elle n'est plus que de moitié environ pour un angle de 60°. Cette distribution peut être satisfaisante si, en dehors de la surface que l'on veut éclairer, il n'est pas gênant d'avoir une certaine luminosité. Dans l'hypothèse inverse il convient de restreindre le faisceau lumineux.

La figure 5 présente de manière schématique en coupe, un coté de vitrage de toit comportant un ensemble de diodes 6, sur un support 5 constitué par une lame de verre. L'ensemble des diodes 6 et de leur support 5 est incorporé comme précédemment dans un matériau formé à partir de plusieurs intercalaires plastiques (3,4,3').

La figure 5 illustre le fait que le flux lumineux émis par les diodes 6 est distribué en un faisceau largement ouvert. Sans autre dispositif que le réflecteur qui fait partie de l'enveloppe de la diode, le flux initial se développe sur un angle à l'origine, autrement dit dans le matériau intercalaire et dans la feuille 2, qui peut aller jusqu'à 180° et n'est pas ordinairement inférieur à 120° fonction de la configuration de l'enveloppe de la diode. Ceci est représenté par l'angle α₁.

Lorsque l'on souhaite limiter le faisceau des mesures complémentaires sont nécessaires. La figure 5 illustre de manière schématique l'utilisation d'une optique de Fresnel 8 sur la face 4 du vitrage en regard des diodes. Le faisceau est ainsi ramené à un angle plus restreint α₂.

Un autre mode susceptible de produire un faisceau moins largement ouvert consiste en l'utilisation d'un diaphragme qui limite le flux à la partie dirigée dans le sens souhaité. Le diaphragme peut être constitué dans un motif émaillé opaque 9, appliqué sur la face de la feuille de verre 2 tournée vers l'habitacle. Cette disposition doit être appliquée à chaque diode individuellement. Il est donc nécessaire que les positions respectives des diodes et des ouvertures dans la couche émaillée opaque, soient rigoureusement établies.

Le graphique de la figure 4 illustre l'effet d'un exemple de ce mode de limitation du faisceau par diaphragme. Le diaphragme est schématisé par les deux flèches définissant son ouverture. L'émail 9 est disposé à 3mm de la source dont la dimension est celle d'une diode, soit environ 2,5mm. L'ouverture libre d'émail est de 0,5mm. Dans cette configuration le faisceau s'ouvre à 48° d'angle.

La figure 6 illustre de manière schématique l'utilisation d'un système de couches bas-émissif 10, appliqué en position 4. Dans cette position les couches ne sont pas protégées contre les altérations mécaniques ou chimiques en provenance de l'habitacle. Cette disposition est néanmoins nécessaire pour atteindre l'efficacité requise. Les couches à base d'oxydes, obtenues par pyrolyse offrent une bonne résistance mécanique.

Les systèmes "low-e" (bas-émissifs) pyrolytiques les plus usuels comportent une couche d'oxyde d'étain dopé déposée sur une première couche ayant pour rôle de neutraliser la couleur en réflexion. La couche au contact du verre est ordinairement une couche de silice ou d'oxy-carbure de silicium, éventuellement modifiée par des additifs. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques.

Un exemple de système low-e répondant aux propriétés recherchées est constitué d'une couche d'oxyde d'étain dopé à 2% atomique de fluor, dont l'épaisseur est de 470nm. Cette couche est déposée sur un couche au contact du verre, composée d'oxy-carbure de silicium de 75nm d'épaisseur. Ce système sur une feuille de verre clair de 4mm d'épaisseur conduit à une émissivité d'environ 0,1.

D'autre systèmes de couches low-e peuvent être produits par une technique de pulvérisation cathodique tout en conservant une résistance mécanique suffisante. Des systèmes de ce type sont par exemple composés d'oxydes notamment des couches à base d'oxyde de titane en association avec d'autres oxydes métalliques notamment d'oxyde de zirconium. Des couches de ce type sont décrites en particulier dans la demande WO2010/031808.

A titre d'exemple encore un système utilisable comporte une couche d'un alliage de chrome et de zirconium. Pour protéger cette couche métallique déposée par pulvérisation cathodique, elle est prise entre deux couches de nitrure de silicium. Cet ensemble conduit aussi à une émissivité satisfaisante avec une réduction de la transmission lumineuse qui peut atteindre 10%, réduction qui pour l'usage considéré ne constitue pas un inconvénient.

L'utilisation de ces systèmes bas émissifs améliore considérablement le confort dans l'habitacle en période froide et peut rendre superflu l'usage d'un velum.

Les toits vitrés selon l'invention peuvent avantageusement combiner plusieurs fonctionnalités. Parmi celles-ci il est intéressant de bénéficier du toit vitré pour l'éclairage, comme développé ci-dessus, mais aussi de disposer d'une variation commandée de la transmission lumineuse, que cette variation soit ou non mise en oeuvre simultanément.

L'utilisation d'un film fonctionnel SPD est l'objet de publications antérieures et notamment WO2005/102688 qui spécifie certaines des conditions de mise en oeuvre qui sont rappelées ci-dessous à propos des figures.

Le principe de l'application des cellules SPD pour des toits automobile à transmission lumineuse commandée est bien connu. L'utilisation de ces films permet de modifier de façon très importante la transmission entre deux états distincts, un état clair et un état obscur. Un intérêt de ces systèmes est, à l'état obscur, de parvenir à la suppression presque complète de la transmission lumineuse. Les films disponibles dans le commerce permettent ainsi de réduire la transmission dans le visible à moins de 1%. C'est l'état qui correspond à l'absence de champ électrique. Dans ces conditions le vitrage assure le caractère «privatif» recherché de façon particulièrement efficace. La variation de transmission lumineuse visible peut être aussi élevée que 40% ou plus entre les deux états du film. Le choix des films permet le cas échéant de fixer l'importance de cette variation. Les utilisateurs privilégient les écarts relativement importants, et généralement ceux-ci ne sont pas inférieurs à 30% dans les applications envisagées.

Si la variation de transmission lumineuse est déterminante dans le choix des films SPD, ceux-ci ont un rôle important dans la transmission énergétique des vitrages dans lesquels ils sont incorporés. A l'état obscur la transmission énergétique, indépendamment de la présence de feuilles de verre ou d'intercalaires absorbants, est ordinairement inférieure à 5%. L'état obscur est normalement celui du véhicule à l'arrêt, une transmission énergétique très limitée est donc particulièrement bienvenue. A l'état clair la transmission énergétique est sensiblement plus importante du fait même que le rayonnement visible s'accompagne aussi d'une transmission énergétique. Le film SPD absorbe néanmoins une part significative de l'énergie.

L'utilisation des films SPD est sujette à quelques exigences en dehors de celles concernant leurs performances sur la modification de la transmission lumineuse. Il convient tout d'abord de protéger le film fonctionnel mécaniquement et chimiquement.

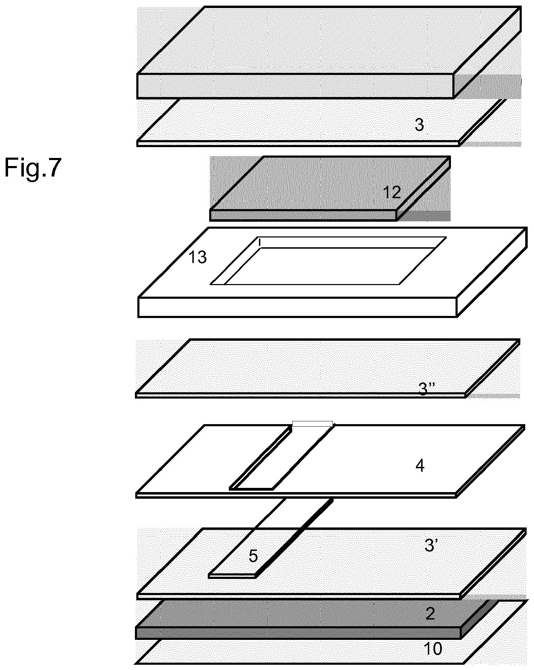

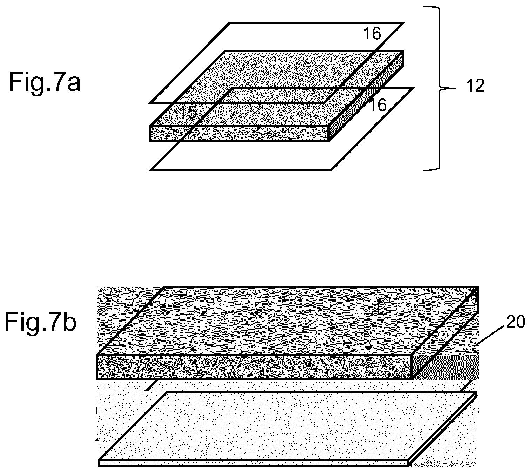

La figure 7 illustre la composition d'un toit offrant les deux fonctionnalités, éclairage et transmission lumineuse commandée. Comme pour le toit de la figure 1 on retrouve les deux feuilles de verre 1 et 2 et les intercalaires 3, 3' et 4, et la lame 5 support des diodes.

Le film SPD est représenté schématiquement en 12. Il ne couvre pas la totalité du vitrage. Les bords du film SPD doivent être protégés du contact avec l'atmosphère extérieure, en particulier pour protéger les particules actives de l'humidité. Pour prévenir tout contact avec l'atmosphère, le film SPD 12 est entièrement enveloppé dans les différentes feuilles de matériau intercalaire. Pour envelopper le film 12, une feuille intercalaire 13 d'épaisseur voisine de celle du film est disposée de manière à l'entourer. Une découpe appropriée de la feuille 13, permet d'entourer le film pour l'isoler de l'extérieur. La figure 7 montre la feuille 13 constituée d'une seule pièce dans laquelle un évidement est aménagé. Il est possible de remplacer cette pièce unique par un ensemble de bandes juxtaposées entourant le film 12 de manière équivalente. La présence de cette feuille 13 isole le film SPD et simultanément assure une répartition uniforme de la pression exercée sur les constituants du vitrage lors de son assemblage.

La feuille 13 peut être ou non de même nature que les intercalaires 3 et 4. La fusion des différentes feuilles lors de l'assemblage est facilitée si ces feuilles sont de même nature.

Une autre exigence des films SPD est liée à leur sensibilité à la chaleur. Dans les films SPD les particules qui sont ordinairement incorporées dans une matrice polymère peuvent être altérées par une élévation excessive de la température. Dans une moindre mesure les films peuvent voir leur propriétés modifiées irréversiblement s'ils sont exposés à des froids trop intenses par exemple de - 40°C. L'exposition aux variations externes de température est accentuée par la position envisagée selon l'invention. Le rayonnement solaire, et en particulier les rayons infrarouges, peuvent conduire à une forte élévation de température.

Pour prévenir la dégradation du film , il est prévu, notamment dans le texte précité, de disposer un filtre infrarouge au-dessus du film SPD.

Il est aussi souhaitable de protéger le SPD contre les ultraviolets. Les matériaux utilisés pour constituer les feuilletés et encapsuler les cellules sont ordinairement des produits qui par eux-mêmes sont des écrans aux UV. C'est le cas en particulier des matériaux tels que les polyvinyl-butyrals (PVB) ou les polymères d'éthylène-vinyl-acétate (EVA), présentés antérieurement pour réaliser les structures feuilletées de ces toits. La présence de tels composés constitue un filtre aux UV pratiquement complet. Il n'est donc pas nécessaire de prévoir des éléments supplémentaires.

A la figure 7 les éléments fonctionnels présents dans le feuilleté sont dans des positions relatives qui tiennent compte de leur possible interdépendance. A titre indicatif les moyens d'éclairage constitués par les diodes électroluminescentes sont bien évidemment situés sous le film de contrôle de la transmission lumineuse, de sorte que le flux lumineux qu'elles produisent est indépendant des variations de l'absorption lumineuse imposées par ce film.

Le film de contrôle de la transmission lumineuse, comme les moyens d'éclairage sont nécessairement alimentés électriquement. Leur raccordement au système général d'alimentation électrique du véhicule se fait nécessairement à partir des bords du vitrage. Les conduites électriques de connexion ne sont pas normalement transparentes. Pour ne pas rompre la transparence même limitée du vitrage, on s'efforce de dissimuler ces conduites dans les zones périphériques du vitrage, lesquelles comportent normalement des parties émaillées opaques destinées notamment à masquer les marques de collage irrégulières. Ces masques dissimulent aussi les limites des films SPD 12 avec leur entourage 13. La figure 7 ne représente pas ces bandes émaillées.

La structure des films de type SPD décrite dans la demande WO2005/102688 est schématisée à la figure 7a. Cette structure comporte un élément central 15 constitué d'un polymère contenant les particules sensibles à l'application du champ électrique. De part et d'autre de cet élément central 15, et s'étendant sur chacune des faces de celui-ci, deux électrodes 16 permettent d'appliquer la tension nécessaire à la commande. De manière connue les électrodes 16 sont avantageusement constituées de feuilles essentiellement transparentes revêtues de couches minces conductrices. Le plus usuellement de feuilles de poly-téréphtalate d'éthylène glycol (PET) de quelques dizaines de microns d'épaisseur qui combinent une bonne transparence à une résistance mécanique élevée. Sur ces feuilles les couches conductrices sont avantageusement du type TCO (thin conductive oxide), tel que les couches d'ITO (indium tin oxide).

Comme indiqué ci-dessus, les composants des films SPD, et notamment les particules de nature organique, sont sensibles au vieillissement, en particulier sous l'effet de la chaleur. Pour leur conférer la longévité souhaitée le film est normalement protégé par des filtres interposés entre la feuille de verre externe 1 exposée au rayonnement solaire, et le film SPD 15. Des filtres infrarouges sont utilisés dans de nombreuses applications dans les vitrages antisolaires ou dans les vitrages bas-émissifs. Ils sont généralement constitués de couches minces d'oxydes conducteurs, ou mieux, car beaucoup plus performants de couches métalliques suffisamment minces pour être pratiquement transparentes. Dans ces filtres les couches métalliques sont associées à des couches diélectriques également minces et transparentes qui donnent à l'ensemble la sélectivité nécessaire. Le plus souvent pour améliorer cette sélectivité, qui s'accompagne de réflexion que l'on s'efforce de rendre aussi neutre que possible, les filtres comportent une pluralité de couches métalliques lesquelles sont pour l'essentiel à base d'argent.

Les couches filtrant les infrarouges sont soit appliquées sur la feuille de verre externe soit introduites par le biais d'une feuille polymère intercalaire, notamment du type PET. La figure 7b montre un détail d'un assemblage de ce type dans lequel sous la feuille de verre externe 1, une feuille 14 portant le filtre infrarouge est disposée entre deux feuilles 3 et 20 de matériau intercalaire. Dans la mesure ou le support des couches de type PET n'est pas lui- même de nature à adhérer au verre, il est nécessaire de l'introduire entre deux feuilles intercalaires thermoplastiques. L'utilisation d'un film support permet de ne pas soumettre les couches fragiles à des températures importantes. La seule contrainte reste la température imposée par passage à l'étuve au moment de l'assemblage. La contrepartie est le fait de devoir rajouter une feuille intercalaire qui accroît l'épaisseur de l'ensemble.

Il est également possible de procéder avec un système de couches déposé directement sur la feuille de verre externe. Mais comme indiqué, si l'on choisit des filtres très performants, comme ceux comprenant des couches métalliques, ces couches sont appliquées par des techniques de pulvérisation cathodique, techniques opérées sur des feuilles planes. Par suite, cette solution implique que ces couches subissent les traitements thermiques lors de la mise en forme de cette feuille de verre.

Le choix du système de couches est avantageusement celui de systèmes à plusieurs couches d'argent pour obtenir un filtre efficace et qui permette le contrôle de la coloration notamment en réflexion. Un ensemble de couches particulièrement efficace est tel que décrit dans la demande WO2011/147875. Dans cette demande le système préconisé comporte trois couches d'argent et des couches diélectriques, l'ensemble étant choisi, notamment les épaisseurs des couches d'argent, de telle sorte que la coloration en réflexion soit satisfaisante même sous de faibles incidences d'observation.

La protection du film SPD doit aussi tenir compte de la présence des diodes lorsque celles-ci sont disposées dans des parties de la surface du toit couvertes par ce film. L'exemple donné plus haut montre, par un choix approprié de diodes et de leur disposition, qu'il est possible de limiter l'accroissement local de température lié au fonctionnement des diodes à quelques dizaines de degrés. Cet accroissement reste dans tous les cas inférieur à celui lié à l'exposition au rayonnement solaire.

## Revendications

1. Toit de véhicule automobile vitré feuilleté comprenant deux feuilles de verre externe et interne et des feuilles intercalaires assemblant les feuilles de verre, et comprenant, disposés entre les deux feuilles de verre, un ensemble de contrôle de la transmission lumineuse de type SPD (suspended particle device), et des éléments d'éclairage par diodes électroluminescentes (LED) et dans l'épaisseur duquel l'ensemble SPD et les LED sont superposés, les LED étant disposées entre l'ensemble SPD et la feuille de verre interne.

2. Toit selon l'une des revendications précédentes dans lequel le choix des diodes de leur alimentation et de leur disposition dans le feuilleté est tel qu'en fonctionnement la température dans le feuilleté demeure inférieure à 80°C.

3. Toit selon la revendication 2 dans lequel la puissance électrique de fonctionnement des diodes n'est pas supérieure à 2w et de préférence est inférieure à 1w.

4. Toit selon l'une quelconque des revendications précédentes dans lequel l'efficacité lumineuse de chaque diode n'est pas inférieure à 15lm/w et de préférence pas inférieure à 75lm/w.

5. Toit selon l'une des revendications précédentes dans lequel les diodes et les éléments situés entre ce diode et l'habitacle sont choisis de telle sorte que le flux lumineux présente un spectre qui se situe dans le périmètre défini par les points de coordonnées CIE 1931 : (0,2600 ; 0,3450), (0,4500 ;0,4000), (0,3150 ;0,2900), (0,2350 ;0,2500), et de préférence dans le périmètre défini par les coordonnées (0,2650 ;0,3350), (0,3200 ;0,3200), (0,3100 ;0,3000), (0,2350 ;0,2500).

6. Toit selon l'une des revendications précédentes comprenant deux feuilles de verre constituant les deux faces externe et interne du toit, au moins une des feuilles étant constituée d'un verre coloré.

7. Toit selon l'une des revendications précédentes dans lequel un système de couches formant filtre infrarouge est disposé entre la feuille de verre externe et l'ensemble SPD.

8. Toit selon la revendication 7 dans lequel le système de couches filtre infrarouge est appliqué sur la feuille de verre externe en face 2.

9. Toit selon la revendication 7 ou la revendication 8 dans lequel le système de couches est un système produit par pulvérisation cathodique et comporte un ensemble de trois couches à base d'argent.

10. Toit selon l'une des revendications précédentes qui comporte en position 4 un système de couches bas-émissif, tel que son émissivité soit au plus de 0,3 et de préférence au plus de 0,2.

11. Toit selon l'une des revendications précédentes comportant une commande d'interrupteur avec un capteur de type capacitif incorporé dans le toit pour commander les diodes ou le film SPD.

## Patentansprüche

1. Kraftfahrzeugdach aus Verbundsicherheitsglas, das zwei Glasscheiben außen und innen und Zwischenlagen, welche die Glasscheiben verbinden, umfasst und das eine zwischen den beiden Glasscheiben angeordnete Anordnung zur Steuerung der Lichttransmission vom Typ SPD (suspended particle device) und Leuchtdioden-Beleuchtungselemente (LED) umfasst und in dessen Dicke die SPD-Anordnung und die LED übereinandergesetzt sind, wobei die LED zwischen der SPD-Anordnung und der inneren Glasscheibe angeordnet sind.

2. Dach nach einem der vorhergehenden Ansprüche, bei dem die Auswahl der Dioden, ihrer Stromversorgung und ihrer Anordnung im Verbundsicherheitsglas derart erfolgt, dass die Temperatur im Verbundsicherheitsglas während des Betriebs unter 80°C bleibt.

3. Dach nach Anspruch 2, bei dem die elektrische Betriebsleistung der Dioden nicht mehr als 2 W und bevorzugt weniger als 1 W beträgt.

4. Dach nach einem der vorhergehenden Ansprüche, bei dem die Lichtausbeute jeder Diode nicht weniger als 15 lm/W und bevorzugt nicht weniger als 75 lm/W beträgt.

5. Dach nach einem der vorhergehenden Ansprüche, bei dem die Dioden und die zwischen dieser Diode und dem Innenraum angeordneten Elemente so gewählt sind, dass der Lichtstrom ein Spektrum aufweist, das in dem durch die Koordinatenpunkte (0,2600; 0,3450), (0,4500; 0,4000), (0,3150; 0,2900), (0,2350; 0,2500) nach IEC 1931 definierten Bereich und bevorzugt in dem durch die Koordinaten (0,2650; 0,3350), (0,3200; 0,3200), (0,3100; 0,3000), (0,2350; 0,2500) definierten Bereich liegt.

6. Dach nach einem der vorhergehenden Ansprüche, das zwei Glasscheiben umfasst, welche die Außen- und Innenseiten des Daches bilden, wobei mindestens eine der Scheiben aus einem farbigen Glas besteht.

7. Dach nach einem der vorhergehenden Ansprüche, bei dem ein einen Infrarotfilter bildendes Schichtsystem zwischen der äußeren Glasscheibe und der SPD-Anordnung angeordnet ist.

8. Dach nach Anspruch 7, bei dem das Infrarotfilter-Schichtsystem auf Seite 2 auf die äußere Glasscheibe appliziert ist.

9. Dach nach Anspruch 7 oder Anspruch 8, bei dem das Schichtsystem ein aufgesputtertes System ist und eine Anordnung aus drei Schichten auf Silberbasis umfasst.

10. Dach nach einem der vorhergehenden Ansprüche, das an Position 4 ein niedrigemissives Schichtsystem umfasst, so dass seine Emissivität höchstens 0,3 und bevorzugt höchstens 0,2 beträgt.

11. Dach nach einem der vorhergehenden Ansprüche, das eine Schaltersteuerung mit einem in das Dach integrierten kapazitiven Sensor zum Steuern der Dioden oder der SPD-Folie umfasst.

## Claims

1. Laminated glazed motor-vehicle roof comprising two, external and internal, glass sheets and interlayer sheets joining the glass sheets, and comprising, placed between the two glass sheets, an assembly for controlling light transmission of SPD (suspended particle device) type, and elements for illuminating via light-emitting diodes (LEDs) and in the thickness of which the SPD assembly and the LEDs are superposed, the LEDs being placed between the SPD assembly and the internal glass sheet.

2. Roof according to one of the preceding claims, wherein the choice of the diodes of their power supply and of their arrangement in the laminate is such that in operation the temperature in the laminate remains below 80°C.

3. Roof according to Claim 2, wherein the electrical operating power of the diodes is no higher than 2 W and preferably is lower than 1 W.

4. Roof according to any one of the preceding claims, wherein the luminous efficacy of each diode is no lower than 15 lm/W and preferably no lower than 75 lm/W.

5. Roof according to one of the preceding claims, wherein the diodes and the elements located between this diode and the passenger compartment are chosen such that the light flux has a spectrum that is located in the perimeter defined by the points of the following CIE 1931 coordinates: (0.2600; 0.3450), (0.4500; 0.4000), (0.3150; 0.2900), (0.2350; 0.2500), and preferably in the perimeter defined by the coordinates (0.2650; 0.3350), (0.3200; 0.3200), (0.3100; 0.3000), (0.2350; 0.2500).

6. Roof according to one of the preceding claims, comprising two glass sheets forming the external and internal two faces of the roof, at least one of the sheets consisting of a coloured glass.

7. Roof according to one of the preceding claims, wherein a system of layers forming an infrared filter is placed between the external glass sheet and the SPD assembly.

8. Roof according to Claim 7, wherein the infrared-filter system of layers is applied to the external glass sheet on face 2.

9. Roof according to Claim 7 or Claim 8 wherein the system of layers is a system produced by cathode sputtering and includes a set of three silver-based layers.

10. Roof according to one of the preceding claims, which includes, in position 4, a low-E system of layers, such that its emissivity is at most 0.3 and preferably at most 0.2.

11. Roof according to one of the preceding claims, including a switch control with a capacitive-type sensor incorporated into the roof in order to control the diodes or the SPD film.
